# EUROPÄISCHE PATENTSCHRIFT

(11) **EP 1 956 250 B1**
(45) Veröffentlichungstag und Bekanntmachung des Hinweises auf die Patenterteilung: **02.11.2011**
(21) Anmeldenummer: 08002477.1
(22) Anmeldetag: 11.02.2008
(51) Int. Cl.: F16B 5/02, F24J 2/52

(54) **Schienenartiges Profil**
Rail-shaped profile
Profilé de type rail

(30) Priorität: 12.02.2007 DE 202007002232 U
(43) Veröffentlichungstag der Anmeldung: 13.08.2008
(73) Patentinhaber: IDEEMATEC Deutschland GmbH, 94574 Wallerfing (DE)
(72) Erfinder: Kufner, Johann, 94527 Aholming/Tabertshausen (DE)
(74) Vertreter: advotec.

(56) Entgegenhaltungen:
- CH-A5- 583 400
- DE-U1- 9 215 529
- US-A- 1 957 933

## Beschreibung

Die vorliegende Erfindung betrifft ein Kit mit einem schienenartigen Profil mit mindestens einem in eine Außenfläche eingebrachten Schraubkanal (CH 583400 A).

Profilschienen sind aus dem Stand der Technik bekannt. Sie dienen dort unter anderem als Montageschienen zur Befestigung von Flächenkörpern, wie z.B. Solarmodulen oder Solarkollektoren.

Die Verbindung dieser meist aus Aluminium bestehenden Profilschienen erfolgt häufig mit Gewindeschrauben. Hierzu wird in das Aluprofil ein Aufnahmekanal in Längsrichtung der Schiene eingebracht. In diese Ausformung lassen sich jetzt unterschiedliche Bauteile, wie Rautenmuttern, Hammerkopfschrauben, Sechskantschrauben oder auch Sechskantmuttern einfädeln oder einklicken und verankern.
Ein Nachteil dieser Verbindungsvariante ist das aufwändige Einfädeln und Positionieren der Bauteile. Bei einer ungünstigen Position des Aufnahmekanals sind die Schraubenmuttern nicht sichtbar und müssen dennoch punktgenau von der Schraube erfasst werden. Sind diese Schraubelemente, die in den Aufnahmekanal geschoben werden, nicht mit einem zum Teil aufwändigen Klemmsystem versehen, gleiten sie frei in Längsrichtung des Kanals und erschweren die Montage.

Eine bekannte weiterentwicklung ist das Ausformen eines Schraubkanals, welcher ebenfalls in Längsrichtung des Profils in dieses eingebracht ist. Dieser weist einen Durchmesser auf, welcher dem Gewindekerndurchmesser einer selbstfurchenden Schraube entspricht. Beim Schraubvorgang presst sich das Gewinde der Schraube in die Seitenflanken des Kanals, wodurch eine Schraubverbindung entsteht.
Ein Nachteil dieser Schraubverbindung ist das schwergängige Eindrehen der Schraube, die sich ihren Gewindegang in den Kanal einpresst und diesen dadurch auch auseinanderdrückt. Ein sicherer Halt der Schraubverbindung ist nur bedingt gegeben, da der Formschluss des Gewindes, je nach Einpresstiefe der Gewindeflanken, nur auf einer kleinen Fläche erfolgt.
Bei Aluminiumstrangpressprofilen lassen sich Schraubkanäle in Längsrichtung so ausformen, dass die Seitenwände ein Rillenprofil aufweisen. Entspricht die Anordnung und Ausformung der Rillen dem Gewinde einer Schraube, so kann sie in diesen Schraubkanal eingedreht werden. Sind die Gewindegänge in einem spitzen Winkel angeordnet, wird beim Festziehen der Schraube der Aufnahmekanal nach außen gepresst, wodurch sich die Auflagefläche des Schraubgewindes nochmals verringert.
Ein weiterer Nachteil ist der durchgehende Schraubkanal, der ein Verschieben der Schraube in Längsrichtung des Aufnahmekanals ermöglicht. Während bei einer üblichen Schraubverbindung eine Lochleibung vorhanden ist, kann hier nur der Anpressdruck der Schraube auf die beiden Flanken des Schraubkanals Halt bieten. Wird die Schraube zu wenig angezogen, besteht die Gefahr, dass diese in Längsrichtung des .Schraubkanals bei einer auftretenden Belastung verschoben wird.
Wird die Schraubverbindung jedoch zu stark angezogen, wird durch das Auseinanderpressen der Seitenwände des Aufnahmekanals durch die Gewindeschraube die Auflagefläche der Gewindegänge, und somit die Haltekraft, vermindert. Es besteht auch die Gefahr, dass sich das weiche Aluminium verformt und die Schraubverbindung unbrauchbar wird, wenn die Anpresskraft des Schraubgewindes auf die äußeren Profilrillen des auseinandergedrückten Schraubkanals wirkt.

Der vorliegenden Erfindung liegt die Aufgabe zugrunde, ein schienenartiges Profil zur Verfügung zu stellen, welches die Nachteile des Standes der Technik überwindet.

Diese Aufgabe wird durch ein Kit nach Anspruch 1 gelöst.

Der in das schienenartige Profil eingebrachte Schraubkanal mit Längsrillen an den Seitenwänden, die dem Gewinde einer einzuschraubenden Schraube entsprechen, bietet den Vorteil, dass kein Bauteil in einen Aufnahmekanal eingebracht und punktgenau positioniert werden muss.
Die mindestens zwei Stabilisierungsmittel des Stabilisierungselements, welche links und rechts neben den beiden Seitenwänden des Schraubkanals formschlüssig an das schienenartige Profil anpassbar sind, wirken einem Auseinanderdrücken des Schraubkanals beim Einschrauben einer Schraube entgegen. Dadurch stabilisieren sie die Schraubverbindung und verhindern so das Lockern der Schraubverbindung oder das Verschieben der Schraube in Längsrichtung des Schraubkanals. Durch den Formschluss der Stabilisierungsmittel mit dem schienenartigen Profil entsteht eine starre Verbindung, die keine Drehung in Achse der Schraube ermöglicht und somit ein Lockern der Schraube verhindert.

Bei einer bevorzugten Ausführungsform des erfindunsgemäßen schienenartigen Profils sind die mindestens zwei Stabilisierungsmittel Leisten und/oder Nasen. Insbesondere Leisten sind bei der Herstellung des Stabilisierungselements von Vorteil, da dieses häufig ein Strangpressprofil ist. Neben der einfachen Herstellung erzeugen leistenartige Stabilisierungsmittel einen besonders stabilen Halt von Schrauben im Schraubkanal.

Bei einer weiteren Ausführungsform des erfindungsgemäßen schienenartigen Profils weist dieses mindestens eine, vorzugsweise zwei, parallel zum Schraubkanal verlaufende Nuten zum formschlüssigen Einpassen der Stabilisierungsmittel auf. Dazu weisen die Stabilisierungsmittel (z.B. Leisten) vorzugsweise einer der Form der Nuten entsprechende Form auf. Vorzugsweise sind zwei Nuten so angeordnet, dass der Schraubkanal zwischen den beiden Nuten liegt. In diese Nuten werden die Stabilisierungsmittel des Stabilisierungselements gedrückt, bevor eine entsprechende Schraube in den Schraubkanal eingeschraubt wird.

Der Abstand zwischen den Stabilisierungsmitteln des Stabilisierungselements kann auch so bemessen sein, dass sie an zwei gegenüberliegenden Außenseiten einer Profilschiene angreifen, wodurch das Stabilisierungselement auf die Profilschiene aufgeklipst werden kann. In dieser Ausführungsform umgreift das Stabilisierungselement das schienenartige Profil in seiner kompletten Breite bzw. Höhe.

Bei einer speziellen Ausführungsform des erfindungsgemäßen schienenartigen Profils wirken der Abstand und die Form der Stabilisierungsmittel derart mit dem Abstand und der Form der Nuten des schienenartigen Profils zusammen, dass das Stabilisierungselement mit Hilfe der Stabilisierungsmittel formschlüssig am schienenartigen Profil befestbar ist, wobei vorzugsweise die Seitenwände des Schraubkanals zusammengedrückt werden. Dadurch wird das Rillenprofil der Schraubkanalinnenwände auf die Schraube gepresst.. Durch ein derartiges Anpressen verbessert sich die Haltekraft der Schraube im Schraubkanal und die Schraube wird zugleich geklemmt und gesichert. Dies kann beispielsweise dadurch erreicht werden, dass die Nuten des schienenartigen Profils zumindestens teilweise schmäler sind, als die entsprechenden Stabilisierungsmittel (z.B. Leisten). Dadurch müssen die Stabilisierungsmittel mit etwas Kraftaufwand in die Nuten gedrückt werden.

Mit Vorteil ist das schienenartige Profil ein Strangpressprofil, vorzugsweise ein Aluminiumstrangpressprofil. Dadurch lassen sich Ausformungen (beispielsweise Nuten) in einfacher Weise in der Schienenaußenhaut in Längsrichtung einbringen.

Mit Vorteil ist das Stabilisierungselement ein Strangpressprofil, vorzugsweise ein Aluminiumstrangpressprofil. Auch dies erleichtert - wie bereits oben erwähnt - die Herstellung (beispielsweise mit Leisten).

Vorzugsweise ist das schienenartige Profil als Hohlprofil .ausgebildet. Dies ermöglicht eine Material- und Gewichtseinsparung.

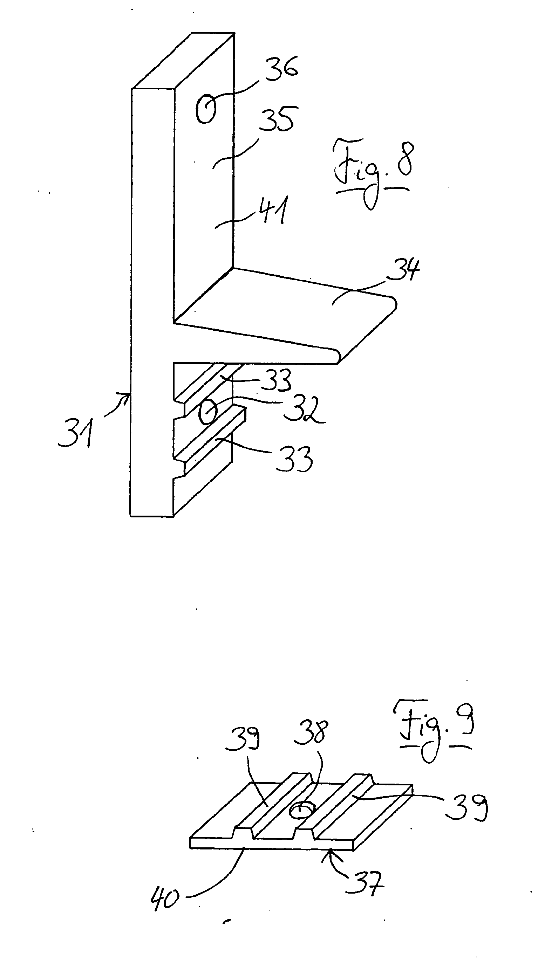

Bei einer speziellen Ausführungsform des erfindungsgemäßen schienenartigen Profils ist das Stabilisierungselement gleichzeitig ein mit dem schienenartigen Element zu verbindendes Bauteil, insbesondere ein Verbindungsteil zum Verbinden des schienenartigen Profils mit einer weiteren Profilschiene. Dieses Bauteil weist die oben genannten Stabilisierungsmittel auf, die sich formschlüssig in die Anpressfläche der Profilschiene und deren Nuten anpassen. Einem Auseinanderdrücken des Schraubkanals durch das Anziehen einer Schraube wirken die Stabilisierungselemente (z.B. Leisten) des angeschraubten Bauteils, die sich z.B. in den beiden Nuten links und rechts neben dem Schraubkanal befinden, entgegen. Durch den Formschluss des angeschraubten Bauteils entsteht eine starre Verbindung, die keine Drehung in Achse der Schraube ermöglicht, wodurch die Schraube festgehalten wird.
Das genannte Bauteil kann beispielsweise ein Verbindungselement zur Verbindung von zwei Profilschienen sein (siehe z.B. Figur 8).

Bei einer Ausführungsform des erfindungsgemäßen schienenartigen Profils sind die Stabilisierungsmittel trapezförmig ausgebildet. Im Zusammenspiel mit einer rechtwinkligen Nut, die etwas schmäler ist als der breiteste Teil des Stabilisierungsmittels, lassen sich z.B. die oben genannten Vorteile des Zusammenpressens der Seitenwände des Schraubkanals erzielen.

Die vorliegende Erfindung betrifft ferner ein Stabilisierungselement zur Stabilisierung eines Schraubkanals einer Profilschiene beim Einschrauben einer Schraube, umfassend eine Aussparung zur Durchführung der in den Schraubkanal der Profilschiene zu schraubenden Schraube sowie mindestens zwei Stabilisierungsmittel, welche formschlüssig an das schienenartige Profil anpassbar sind.
Mit dem erfindungsgemäßen Stabilisierungselement lassen sich die oben geschilderten Vorteile des Stabilisierens eines Schraubkanals einer Profilschiene erzielen.

Mit Vorteil sind die mindestens zwei Stabilisierungsmittel des erfindungsgemäßen Stabilisierungselements Leisten und/oder Nasen. Insbesondere Stabilisierungselemente mit Leisten sind einfach in der Herstellung, insbesondere wenn es sich bei dem Stabilisierungselement um ein Strangpressprofil handelt.

Bei einer bevorzugten Ausführungsform ist das Stabilisierungselement ein Strangpressprofil, vorzugsweise ein Aluminiumstrangpressprofil.

Das erfindungsgemäße Stabilisierungselement kann weitere Einrichtungen zur Befestigung weiterer Profilschienen und/oder Stabilisierungselemente aufweisen. Ein derartiges Stabilisierungselement ist z.B. in der Figur 8 dargestellt.

Bei einer speziellen Ausführungsform des erfindungsgemäßen Stabilisierungselements ist eine, der die Stabilisierungsmittel tragenden Seite gegenüberliegende Seite im wesentlichen plan ausgebildet. Ein solches Stabilisierungsmittel eignet sich zur Verbindung von zwei Profilschienen in einem beliebigen Winkel zueinander.

Weitere Merkmale der Erfindung ergeben sich aus der nachfolgenden Beschreibung von bevorzugten Ausführungsformen der Erfindung in Verbindung mit den Zeichnungen und den Unteransprüchen. Hierbei können die einzelnen Merkmale jeweils für sich allein oder in Kombination miteinander verwirklicht sein.

In den Zeichnungen zeigen:
- Figur 1:: Eine perspektivische Darstellung einer erfindungsgemäßen Profilschiene (schienenartiges Profil) mit einem daran befestigten Stabilisierungselement;
- Figur 2:: Einen Querschnitt durch eine erfindungsgemäße Profilschiene mit angeschraubtem Stabilisierungselement;
- Figur 3:: Einen Querschnitt durch eine erfindungsgemäße Profilschiene mit angeschraubtem Stabilisierungselement;
- Figur 4:: Einen Querschnitt durch eine erfindungsgemäße Profilschiene mit angeschraubtem Stabilisierungselement;
- Figur 5:: Einen Querschnitt durch eine erfindungsgemäße Profilschiene mit angeschraubtem Stabilisierungselement;
- Figur 6:: Einen Querschnitt durch eine erfindungsgemäße Profilschiene mit angeschraubtem Stabilisierungselement;
- Figur 7:: Einen Querschnitt durch eine erfindungsgemäße Profilschiene mit angeschraubtem Stabilisierungselement;
- Figur 8:: Perspektivische Darstellung eines erfindungsgemäßen Stabilisierungselements;
- Figur 9:: Perspektivische Darstellung eines erfindungsgemäßen Stabilisierungselements.

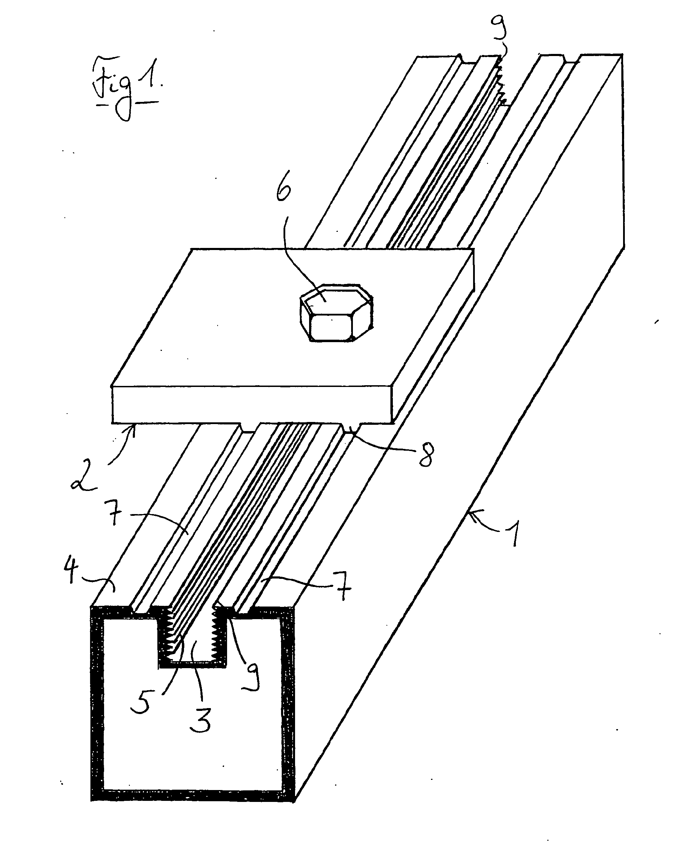

Figur 1 zeigt eine perspektivische Darstellung einer erfindungsgemäßen Profilschiene 1 mit daran befestigtem Stabilisierungselement 2. Die Profilschiene 1 weist einen in Längsrichtung verlaufenden Schraubkanal 3 auf, welcher in eine Außenfläche 4 eingebracht ist. Der Schraubkanal 3 weist ebenfalls in Längsrichtung der Profilschiene 1 verlaufende Rillen 5 zum Einschrauben einer oder mehrerer Schrauben 6 auf. Die Profilschiene 1 ist als Hohlprofil ausgebildet und besteht aus Aluminium. Links und rechts neben dem Schraübkanal 3 weist die Profilschiene 1 ebenfalls in Längsrichtung der Profilschiene 1 verlaufende, in die Außenfläche 4 eingebrachte Nuten 7 auf. Diese Nuten 7 weisen einen leicht trapezförmigen Aufbau auf, d.h., dass die aufeinander treffenden Flächen der Nuten in einem leicht stumpfen Winkel zueinander stehen. Das Stabilisierungselement 2 weist eine Aussparung zur Durchführung einer Schraube 6 auf, welche in dieser Darstellung jedoch von der Schraube 6 verdeckt und nicht zu sehen ist. Auch das Stabilisierungselement 2 ist aus einem Strangpressprofil gefertigt. Das Stabilisierungselement 2 weist zwei parallel verlaufende Leisten 8 auf. Die Leisten 8 sind trapezförmig ausgebildet. Zudem ist der Abstand zwischen den beiden Nuten 7 etwas größer als der Abstand der beiden Leisten 8. Dadurch und durch die trapezförmige Ausgestaltung der Nuten und der Leisten werden die Seitenflanken 9 des Schraubkanals 3 beim Einpressen der Leisten 8 in die Nuten 7 etwas zusammengedrückt, wodurch die Schraube 6 im Schraubkanal zusätzlich eingeklemmt und gesichert wird. Dadurch wird beispielsweise auch verhindert, dass die Schraube im Schraubkanal in Längsrichtung verrutscht.

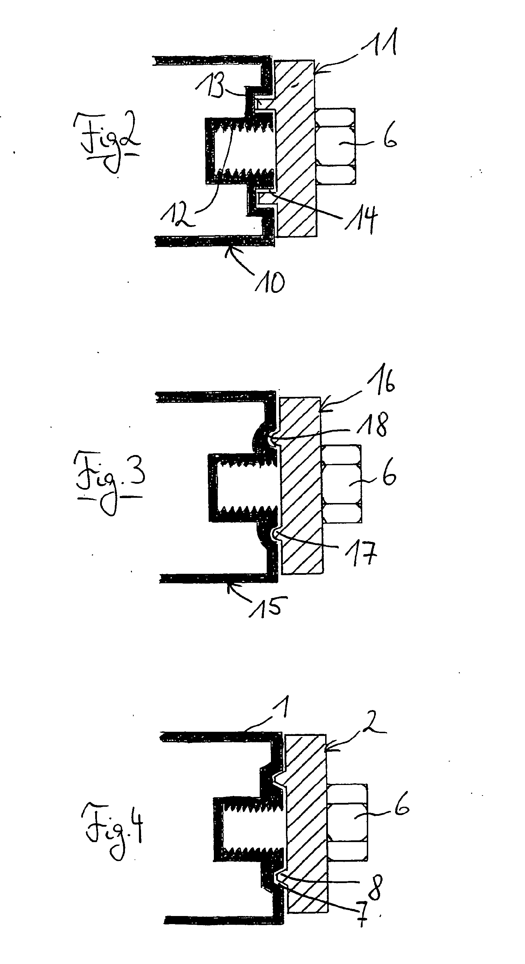

Figur 2 zeigt einen Querschnitt durch eine weitere Ausführungsform einer erfindungsgemäßen Profilschiene 10 mit daran befestigtem Stabilisierungselement 11. Das Stabilisierungselement 11 ist durch eine Schraube 6, welche in den Schraubkanal 12 der Profilschiene 10 eingeschraubt ist, befestigt. Das Stabilisierungselement 11 weist rechteckige Stabilisierungsleisten 13 auf, welche in entsprechend geformte Nuten 14 eingepasst sind.

Figur 3 zeigt ebenfalls einen Querschnitt durch eine erfindungsgemäße Profilschiene 15 mit aufgeschraubtem Stabilisierungselement 16, wobei die Stabilisierungsleisten 17 des Stabilisierungselements 16 sowie die ebenfalls in Längsrichtung der Profilschiene verlaufenden Nuten 18 rund ausgebildet sind.

Figur 4 zeigt einen Querschnitt durch die Profilschiene 1 aus Figur 1 mit dem daran befestigten Stabilisierungselement 2, wobei die Nuten 7 sowie die Leisten 8 trapezförmig ausgebildet sind.

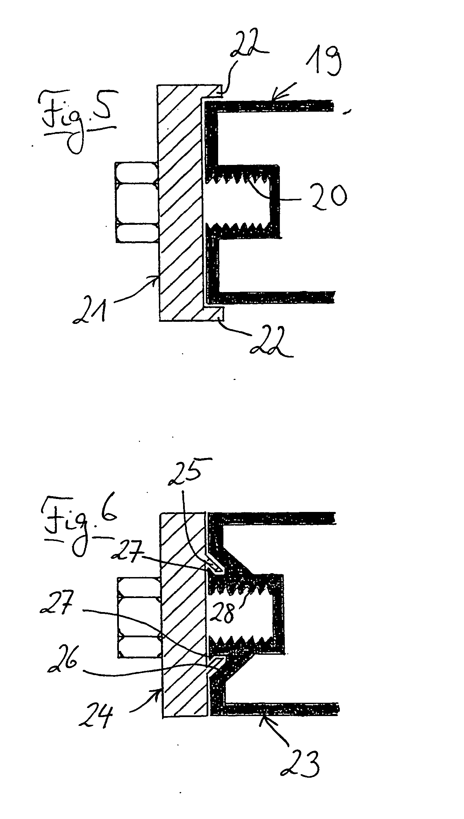

Figur 5 zeigt eine weitere Ausführungsform einer erfindungsgemäßen Profilschiene 19 im Querschnitt. Diese Profilschiene 19 weist keine speziellen Nuten zur Aufnahme einer Stabilisierungsleiste auf. In diesem Ausführungsbeispiel erfolgt die Stabilisierung des Schraubkanals 21 der Profilschiene 19 durch ein Stabilisierungselement 21, bei dem an zwei gegenüberliegenden Enden Stabilisierungsleisten 22 vorgesehen sind. Das Stabilisierungselement 21 ist so dimensioniert und an die Ausmaße der Profilschiene 19 angepasst, dass es an die Profilschiene 19 angeklipst werden kann. Dabei dienen die Stabilisierungsleisten 22 als Halteelemente, die zum einen eine formschlüssige Verbindung zwischen der Profilschiene 19 und dem Stabilisierungselement 21 ermöglichen und zum anderen den Schraubkanal 20 beim Einschrauben einer Schraube 6 stabilisieren, indem sie den Schraubkanal 20 etwas zusammendrücken. In dieser Ausführungsform umgreift das Stabilisierungselement 21 die Profilschiene 19 in ihrer gesamten Breite. Es ist aber auch denkbar, dass das Stabilisierungselement 19 lediglich einen Teil einer Seitenfläche einer Profilschiene umgreift, wenn entsprechende Angriffsmöglichkeiten für die Stabilisierungsleisten 22 gegeben sind.

Figur 6 zeigt ebenfalls einen Querschnitt durch eine weitere Ausführungsform einer erfindungsgemäßen Profilschiene 23 mit befestigtem Stabilisierungselement 24. Das Stabilisierungselement 24 weist schräg angesetzte Stabilisierungsleisten 25 auf. Die Profilschiene 23 weist Nuten 26 auf, welche an die Form der Stabilisierungsleisten 25 angepasst sind. Die Profilschiene weist ferner am oberen Rand der Nuten kleine Nasen 27 auf, die ein Einklicken der Stabilisierungsleisten 25 in die Nuten 26 der Profilschiene 23 ermöglichen. Dies dient zur Fixierung des Stabilisierungselements bei der Montage. Durch das Anpressen beim Schraubvorgang drücken nun die schräg angesetzten Stabilisierungsleisten 25 in den entsprechend ausgeformten Nuten 26 den Schraubkanal 28 der Profilschiene 23 zusammen.

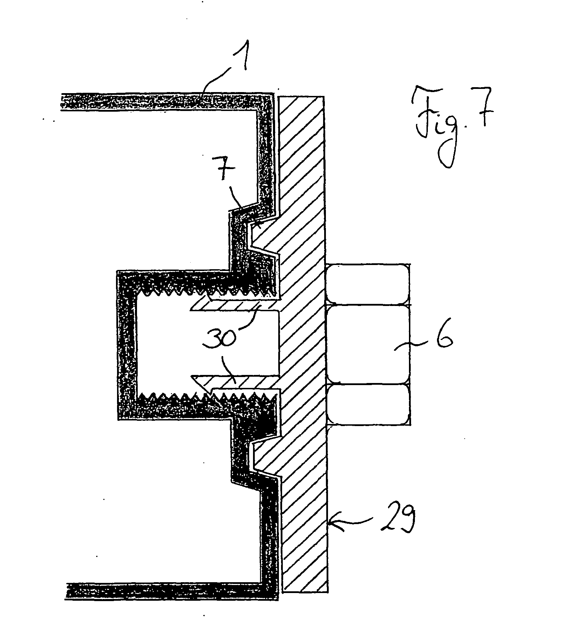

Figur 7 zeigt einen Querschnitt durch die Profilschiene 1 aus Figur 1, wobei das der Profilschiene 1 zugeordnete und an diesem befestigte Stabilisierungselement Haltenasen 30 aufweist. Diese Haltenasen 30 sind so ausgeformt, dass sie sich in den Schraubkanal 3 einklicken lassen und das Stabilisierungselement 29 bei der Montage fixieren, wobei ein seitliches Verschieben in Längsrichtung des Schraubkanals 3 möglich ist.

Figur 8 zeigt eine perspektivische Darstellung eines erfindungsgemäßen Stabilisierungselements 31, welches auch als Bauteil zur Verbindung von zwei Profilschienen fungiert. In einem unteren Teil weist das Stabilisierungselement die erfindungsgemäßen Elemente, nämlich eine Öffnung 32 durch Durchführung einer Schraube sowie zwei Stabilisierungsleisten 33 auf. Das Stabilisierungselement 31 ist in der vorliegenden Ausführungsform aus einem Teilstück eines Aluminiumstrangpressprofils gefertigt. Das Stabilisierungselement 31 weist ferner ein Auflager 34 auf, welches zur gleichmäßigen Lastverteilung auf eine darunter liegende Profilschiene dient. Eine nach oben weisende Befestigungslasche 35 mit einer planen Fläche 41 weist eine Bohrung 36 auf und ermöglicht die Anbindung einer weiteren Profilschiene. Da sich die erfindungsgemäßen Stabilisierungsmittel (z.B. Stabilisierungsleisten) nur in Längsrichtung einer Profilschiene anbringen lassen, wird hier die Anpressfläche zur Schiene plan gehalten.

Figur 9 zeigt eine weitere Ausführungsform eines erfindungsgemäßen Stabilisierungselements 37, welches ebenfalls aus einem Aluminiumstrangpressprofil gefertigt ist und eine Öffnung 38 sowie zwei Stabilisierungsleisten 39 aufweist. Die der die Leisten 39 tragenden Fläche gegenüberliegende Fläche 40 ist plan ausgebildet. Das gesamte Bauteil ist möglichst dünn gehalten. Das Stabilisierungselement wird mit seiner planen Fläche auf die Fläche 41 des Bauteils 31 aus Figur 8 gebracht, so dass die beiden Öffnungen 36 und 38 aufeinander liegen. Durch die Kombination der beiden Elemente 31 und 37 ist eine im Winkel unabhängige Anbindung einer weiteren Profilschiene möglich. Die Stabilisierungsleisten 39 stabilisieren wiederum den Schraubkanal einer Profilschiene. Ein Ausrichten der Konstruktion ist vor dem Festdrehen in Achse der Schraube möglich.

Eine experimentelle Untersuchung der Effizienz eines erfindungsgemäßen Stabilisierungselements wurde vom TÜV Bayern durchgeführt. Die Ergebnisse dieser Untersuchung zeigen die enorme Stabilisierung eines Schraubkanals bei Einschrauben einer Schraube und werden im folgenden dargestellt:

### Prüfberichtung: Zugwerte Schraubkanal einer Aluschiene:

40 x 40 mm Aluminiumhohlprofilschiene mit Schraubkanal durchgehend für eine 8 mm metrische Gewindeschraube bei 13 mm Einschraubtiefe.

### Vertikalzug:

Ohne Stabilisierung des Schraubkanals:
1,8 KN/2,0 KN/2,1 KN = im Schnitt 1,97 KN

Mit Stabilisierung des Schraubkanals (Stabilisierungsleisten links und rechts)
4,8 KN/5,7 KN/5,3 KN = im Schnitt 5,27 KN.

### Horrizontalzug:

Ohne Stabilisierung des Schraubkanals:
1,7 KN/2,0 KN/1,9 KN = im Schnitt 1,87 KN

Mit Stabilisierung des Schraubkanals (Stabilisierungsleisten links und rechts)
3,1 KN/3,8 KN/2,9 KN = im Schnitt 3,27 KN.

Diese Versuchsergebnisse zeigen den enormen Nutzen der erfindungsgemäßen Stabilisierungselemente bzw. Profilschienen hinsichtlich der Stabilisierung von Schraubverbindungen.

## Patentansprüche

1. Kit, umfassend ein schienenartiges Profil (1, 10, 15, 19, 23) mit mindestens einem in eine Außenfläche (4) eingebrachten Schraubkanal (3,12,20,28) sowie mindestens ein Stabilisierungselement (2, 11, 16, 21, 24, 29, 31, 37) zur Stabilisierung des Schraubkanals beim Einschrauben einer Schraube (6), welches eine Aussparung (32, 38) zur Durchführung einer in den Schraubkanal zu schraubenden Schraube aufweist **dadurch gekennzeichnet, dass** das Stabilisierungselement (2, 11, 16, 21, 24, 29, 31,37) mindestens zwei Stabilisierungsmittel (8, 13, 17, 22, 25, 33, 39) aufweist, welche links und rechts neben den beiden Seitenwänden (9) des Schraubkanals formschlüssig an das schienenartige Profil angepasst sind, wobei sich die mindestens zwei Stabilisierungsmittel nach einem formschlüssigen Anpassen an das schienenartige Profil mindestens teilweise auf der gleichen Höhe wie die Seitenwände des Schraubkanals befinden.

2. Kit nach Anspruch 1, **dadurch gekennzeichnet, dass** die mindestens zwei Stabilisierungsmittel (8, 13, 17, 22, 25, 33, 39) Leisten und /oder Nasen sind.

3. Kit nach einem der Ansprüche 1 oder 2, **dadurch gekennzeichnet, dass** das schienenartige Profil (1, 10, 15, 19, 23) mindestens eine, vorzugsweise zwei, parallel zum Schraubkanal (3, 12, 20, 28) verlaufende Nuten (7, 14, 18, 26) zum formschlüssigen Einpassen der Stabilisierungsmittel (8, 13, 17, 22, 25, 33, 39) aufweist.

4. Kit nach Anspruch 3, **dadurch gekennzeichnet, dass** der Abstand und die Form der Stabilisierungsmittel (8, 13, 17, 22, 25, 33, 39) derart mit dem Abstand und der Form der Nuten (7, 14, 18, 26) des schienenartigen Profils zusammenwirken, dass das Stabilisierungselement (2, 11, 16, 21, 24, 29, 31, 37) mit Hilfe der Stabilisierungsmittel formschlüssig am schienenartigen Profil befestigbar ist, wobei vorzugsweise die Seitenwände (9) des Schraubkanals (3, 12, 20, 28) zusammengedrückt werden.

5. Kit nach einem der vorhergehenden Ansprüche, **dadurch gekennzeichnet, dass** das schienenartige Profil (1, 10, 15, 19, 23) ein Strangpressprofil, vorzugsweise ein Aluminiumstrangpressprofil, ist.

6. Kit nach einem der vorhergehenden Ansprüche, **dadurch gekennzeichnet, dass** das Stabilisierungselement (2, 11, 16, 21, 24, 29, 31, 37) ein Strangpressprofil, vorzugsweise ein Aluminiumstrangpressprofil, ist.

7. Kit nach einem der vorhergehenden Ansprüche, **dadurch gekennzeichnet, dass** das schienenartige Profil (1, 10, 15, 19, 23) als Hohlprofil ausgebildet ist.

8. Kit nach einem der vorhergehenden Ansprüche, **dadurch gekennzeichnet, dass** das Stabilisierungselement (31, 37) gleichzeitig ein, mit dem schienenartigen Profil zu verbindendes Bauteil, insbesondere ein Verbindungsteil zum Verbinden des schienartigen Profils mit einer weiteren Profilschiene, ist.

9. Kit nach einem der vorhergehenden Ansprüche, **dadurch gekennzeichnet, dass** die Stabilisierungsmittel (8) trapezförmig ausgebildet sind.

## Claims

1. Kit, comprising a rail-like profile (1, 10, 15, 19, 23) having at least one screw channel (3, 12, 20, 28) made in an outer surface (4) and at least one stabilizing element (2, 11, 16, 21, 24, 29, 31, 37) for stabilizing the screw channel when screwing in a screw (6), said stabilizing element (2, 11, 16, 21, 24, 29, 31, 37) having an aperture (32, 38) for passing through a screw which is to be screwed into the screw channel, **characterized in that** the stabilizing element (2, 11, 16, 21, 24, 29, 31, 37) has at least two stabilizing means (8, 13, 17, 22, 25, 33, 39) which are adapted to the rail-like profile in a positive-locking manner on the left and right next to the two side walls (9), wherein the at least two stabilizing means, after positive-locking adaptation to the rail-like profile, are located at least partly at the same level as the side walls of the screw channel.

2. Kit according to Claim 1, **characterized in that** the at least two stabilizing means (8, 13, 17, 22, 25, 33, 39) are strips and/or lugs.

3. Kit according to either of Claims 1 and 2, **characterized in that** the rail-like profile (1, 10, 15, 19, 23) has at least one, preferably two slots (7, 14, 18, 26) which run parallel to the screw channel (3, 12, 20, 28) and are intended for fitting the stabilizing means (8, 13, 17, 22, 25, 33, 39) in a positive-locking manner.

4. Kit according to Claim 3, **characterized in that** the spacing and the shape of the stabilizing means (8, 13, 17, 22, 25, 33, 39) interact with the spacing and the shape of the slots (7, 14, 18, 26) of the rail-like profile in such a way that the stabilizing element (2, 11, 16, 21, 24, 29, 31, 37) can be fastened to the rail-like profile in a positive-locking manner by the stabilizing means, the side walls (9) of the screw channel (3, 12, 20, 28) preferably being compressed.

5. Kit according to one of the preceding claims, **characterized in that** the rail-like profile (1, 10, 15, 19, 23) is an extruded profile, preferably an extruded aluminium profile.

6. Kit according to one of the preceding claims, **characterized in that** the stabilizing element (2, 11, 16, 21, 24, 29, 31, 37) is an extruded profile, preferably an extruded aluminium profile.

7. Kit according to one of the preceding claims, **characterized in that** the rail-like profile (1, 10, 15, 19, 23) is designed as a hollow profile.

8. Kit according to one of the preceding claims, **characterized in that** the stabilizing element (31, 37) is at the same time a component to be connected to the rail-like profile, in particular a connecting part for connecting the rail-like profile to a further profile rail.

9. Kit according to one of the preceding claims, **characterized in that** the stabilizing means (8) is of trapezoidal design.

## Revendications

1. Trousse comportant un profilé (1, 10, 15, 19, 23) en forme de rail doté d'au moins un canal fileté (3, 12, 20, 28) ménagé dans une surface extérieure (4) ainsi qu'au moins un élément de stabilisation (2, 11, 16, 21, 24, 29, 31, 37) qui stabilise le canal fileté lorsqu'une vis (6) est vissée, le profilé présentant une découpe (32, 38) qui permet de faire passer dans le canal fileté une vis à visser,
**caractérisée en ce que**
l'élément de stabilisation (2, 11, 16, 21, 24, 29, 31, 37) présente au moins deux moyens de stabilisation (8, 13, 17, 22, 25, 33, 39) qui sont adaptés en correspondance géométrique au profilé en forme de rail, à gauche et à droite des deux parois latérales (9) du canal fileté, les au moins deux moyens de stabilisation étant situés au moins en partie à même hauteur que les parois latérales du canal fileté après avoir été adaptés en correspondance géométrique au profilé en forme de rail.

2. Trousse selon la revendication 1, **caractérisée en ce que** les au moins deux moyens de stabilisation (8, 13, 17, 22, 25, 33, 39) sont des languettes et/ou des becs.

3. Trousse selon l'une des revendications 1 ou 2, **caractérisée en ce que** le profilé (1, 10, 15, 19, 23) en forme de rail présente au moins une et de préférence deux rainures (7, 14, 18, 26) qui s'étendent parallèlement au canal fileté (3, 12, 20, 28) et qui permettent d'adapter en correspondance géométrique les moyens de stabilisation (8, 13, 17, 22, 25, 33, 39).

4. Trousse selon la revendication 3, **caractérisée en ce que** la distance et la forme des moyens de stabilisation (8, 13, 17, 22, 25, 33, 39) coopèrent avec la distance et la forme des rainures (7, 14, 18, 26) du profilé en forme de rail de telle sorte que l'élément de stabilisation (2, 11, 16, 21, 24, 29, 31, 37) puisse être fixé en correspondance géométrique sur le profilé en forme de rail à l'aide des moyens de stabilisation, les parois latérales (9) du canal fileté (3, 12, 20, 28) étant de préférence comprimées.

5. Trousse selon l'une des revendications précédentes, **caractérisée en ce que** le profilé (1, 10, 15, 19, 23) en forme de rail est un profilé extrudé et de préférence un profilé en aluminium extrudé.

6. Trousse selon l'une des revendications précédentes, **caractérisée en ce que** l'élément de stabilisation (2, 11, 16, 21, 24, 29, 31, 37) est un profilé extrudé et de préférence un profilé en aluminium extrudé.

7. Trousse selon l'une des revendications précédentes, **caractérisée en ce que** le profilé (1, 10, 15, 19, 23) en forme de rail est configuré comme profilé creux.

8. Trousse selon l'une des revendications précédentes, **caractérisée en ce que** l'élément de stabilisation (31, 37) est en même temps un composant à relier au profilé en forme de rail, en particulier une pièce de raccordement qui raccorde le profilé en forme de rail à un autre rail profilé.

9. Trousse selon l'une des revendications précédentes, **caractérisée en ce que** les moyens de stabilisation (8) ont une forme trapézoïdale.
